# EUROPEAN PATENT SPECIFICATION

(11) **EP 1 690 415 B1**
(45) Date of publication and mention of the grant of the patent: **25.04.2007**
(21) Application number: 04818105.1
(22) Date of filing: 08.11.2004
(51) Int. Cl.: H04M 19/00

(54) **METHOD AND APPARATUS FOR REMOTE POWERING USING MULTIPLE SUBSCRIBER LINES**
VERFAHREN UND VORRICHTUNGEN ZUR FERNBESTROMUNG DURCH VERWENDUNG MEHRERER TEILNEHMERANSCHLÜSSE
PROCEDE ET DISPOSITIF POUR ALIMENTATION A DISTANCE PAR UNE PLURALITE DE LIGNES D'ABONNEMENT

(30) Priority: 07.11.2003 US 518200 P; 12.11.2003 BE 200300609
(43) Date of publication of application: 16.08.2006
(73) Proprietor: Cherokee Europe SA, 1301 Wavre (BE)
(72) Inventor: BOGAERTS, Daniel, B-1420 BRAINE-L'ALLEUD (BE)
(74) Representative: pronovem
(86) International application number: PCT/BE2004/000161
(87) International publication number: WO 2005/046198

(56) References cited:
- EP-A- 0 869 655
- EP-A- 1 347 607
- CA-A- 2 305 989
- US-A- 4 953 055
- PATENT ABSTRACTS OF JAPAN vol. 1999, no. 05, 31 May 1999 (1999-05-31) & JP 11 055871 A (SUZUKI MOTOR CORP), 26 February 1999 (1999-02-26) cited in the application
- PATENT ABSTRACTS OF JAPAN vol. 014, no. 036 (E-877), 23 January 1990 (1990-01-23) & JP 01 268434 A (NEC CORP), 26 October 1989 (1989-10-26)

## Description

### Field of the invention

The present invention is related to a method and apparatus for remote line powering in telecommunication systems.

### State of the art

In plain old telephone service (POTS), telephones are remotely powered by electric power drawn from central office (CO) and therefore electric power supply to the telephones is independent of supply of conventional main alternating current (AC) electric power to subscriber premises. The evolution of new and sophisticated telephone and data services introduced new appliances, including new communication interfaces at or near subscriber premises that also require electric power supply. Therefore the demand of electric power has increased.

Electric power supply conveyed on copper line pairs is limited due to safety requirements, as described in telecommunication standard IEC60950-21 on safety requirements in remote powering and electrical parameters. Therefore, improved ways of remotely supplying electric power to appliances at or near subscriber premises are needed while maintaining safety regulations and standards.

Prior art document EP-A-1347607 describes a solution requiring at the remote side (e.g. a street cabinet) a power stage converter for each line pair. This approach leads to a costly solution, because the converters are amongst the most expensive devices in the system. It also implies that in case of a converter breakdown on a specific line pair at the remote site, said line pair cannot be used anymore, unless a spare converter is available. Likewise, in case of opening of a line pair, the converter attached to the line pair becomes useless.

### Aims of the invention

The present invention aims to provide an improved method and apparatus for remotely supplying electric power to appliances at or near subscriber premises overcoming the problems of the prior art solutions, while maintaining safety regulations and standards and keeping the system cost under control.

### Summary of the invention

The invention relates to a method for remote line powering in a telecommunication network, comprising the steps of
- feeding along each line pair in the plurality of line pairs that are adapted for use in the telecommunication network direct current I at an input voltage having a value within a range from V_{A} to V_{B}, thereby supplying electric power via the plurality of line pairs,
- aggregating the electric power supplied via the plurality of line pairs to provide a supply voltage Vₒᵤₜ₁ suitable for powering an appliance.
It further comprises the steps of
- detecting at the line pairs side where power is injected, whether said electric power exceeds a predetermined threshold, and
- if required, limiting the electric power supplied via each line pair of the plurality of line pairs.
Preferably, V_{A} ≥ 100VDC, V_{B} ≤ 400VDC, and I ≤ 60 mA DC.

Preferably the electric power is limited by independently limiting the voltage applied to each line pair and/or the current injected into each line pair.

In an advantageous embodiment the method comprises the further steps of detecting on a line pair a leakage current to earth and subsequently permanently reducing the voltage of said line pair.

Alternatively it further comprises the step of temporarily reducing the voltage of the plurality of line pairs when a leakage current is detected, in order to identify the line pair on which said leakage current is flowing.

In yet another alternative, when a leakage current in the plurality of line pairs is detected, the line pair on which the leakage current is flowing is identified by reducing temporarily the voltage of each line pair in turn.

Preferably, the step of aggregating the electric power supplied via said plurality of line pairs to provide the supply voltage Vₒᵤₜ₁ is performed with a plurality of rectifying devices like semiconductor diodes, most preferably arranged as a plurality of diode bridges, in order to make the polarity of the cabling of the plurality of line pairs indifferent.

Preferably, a plurality of additional rectifying devices is used in series with the plurality of bridges of rectifying devices, in order to make the system tolerant to a fault in the rectifying devices of the bridges.

The supply voltage Vₒᵤₜ₁ typically is within a range from about 100V_{DC} to about 400V_{DC}. In a preferred embodiment the supply voltage Vₒᵤₜ₁ is further converted into a supply voltage Vₒᵤₜ₂ through the use of one power stage converter (DC/DC converter). Alternatively, a plurality of DC/DC converters can be used. Preferably, these power stage converters isolate supply voltage Vₒᵤₜ₂ from aggregate supply voltage Vₒᵤₜ₁. The supply voltage Vₒᵤₜ₂ is preferably within a range from about 40 V_{DC} to about 72 V_{DC}.

In an alternative embodiment, the supply voltage Vₒᵤₜ₁ is used to supply directly appliances that include a power supply normally intended for utility AC line voltages, but that can also accept DC voltages in the range V_{A} to V_{B}.

As another object the invention relates to an apparatus for remote line powering in a telecom network, the apparatus comprising
- a plurality of line pair terminations terminating a corresponding plurality of line pairs that are adapted for use in the telecom network, the line pairs being operative to convey electric power supplied by a corresponding plurality of power sources,
- an electric power aggregator comprising a plurality of diode bridges operative to aggregate the electric power supplied via the plurality of line pairs to provide a supply voltage Vₒᵤₜ₁ suitable for powering an appliance.
The appliance preferably includes a communications appliance and each of the plurality of line pairs preferably includes telephone line twisted pairs.

In a specific embodiment the apparatus further comprises one DC/DC converter. Preferably, it comprises a plurality of DC/DC converters. The DC/DC converter(s) may comprise a redundancy diode.

Advantageously the apparatus further comprises a plurality of additional diodes in series with the plurality of diode bridges.

Advantageously the plurality of electric power sources includes a plurality of separate power stage converters, wherein each power stage converter is operatively associated with a corresponding one of a plurality of separate controllers and operative to convert a DC or AC voltage to a (DC) voltage in the range V_{A} to V_{B}. More preferably, the plurality of separate power stage converters is operative in full electrical isolation from each other.

The apparatus additionally may include an alarm and logic unit operative to generate an alarm indicating and identifying line pair in open circuit.

The alarm and logic unit may additionally be operative to generate an alarm indicating and identifying line pair in overload or short circuit.

The alarm and logic unit may additionally be operative to generate an alarm indicating and identifying line pair submitted to a leakage current to earth higher than a given threshold.

The alarm and logic unit may additionally be operative to temporarily reduce the voltage applied to the plurality of line pairs in order to identify the line pair submitted to a leakage current to earth higher than a given threshold.

The alarm and logic unit may additionally be operative to temporarily reduce the voltage applied to each line pair of the plurality of line pairs in turn in order to identify the line pair submitted to a leakage current to earth higher than a given threshold.

The alarm and logic unit may additionally be operative to reduce the voltage on the line pair of the plurality of line pairs where an alarm condition has been detected.

The apparatus is preferably included in a communication system that further comprises the plurality of line pairs and the plurality of power sources.

### Short description of the drawings

Fig. 1 is a simplified block diagram representing a possible implementation of an apparatus implementing the method of the invention.

Fig. 2 and 3 are simplified block diagrams illustrating two preferred embodiments of the remote line powering apparatus of the present invention.

### Detailed description of the invention

Further objects and features of the invention will become apparent to those skilled in the art from the following description and accompanying drawings.

Telecommunication systems usually comprise central offices (CO) and street cabinets or underground cabinets. Street and underground cabinets are typically used in the telecommunication system as aggregators and distributors of communication cables that are usually employed to convey telephone and data services to a plurality of subscriber units at subscriber premises at different locations.

In a case where the communication cables are line pairs, the line pairs may also be used to remotely power the subscriber units, for example, from a central office (CO) of the telecommunication system. The term "line pair" is used throughout the specification and claims to include telephone line twisted pairs that typically include copper pairs. A link that is provided between the CO and a subscriber unit over a line pair is typically referred to as a "local loop" or "subscriber loop". Each local loop enables communication of data, voice and signalling over the corresponding line pair.

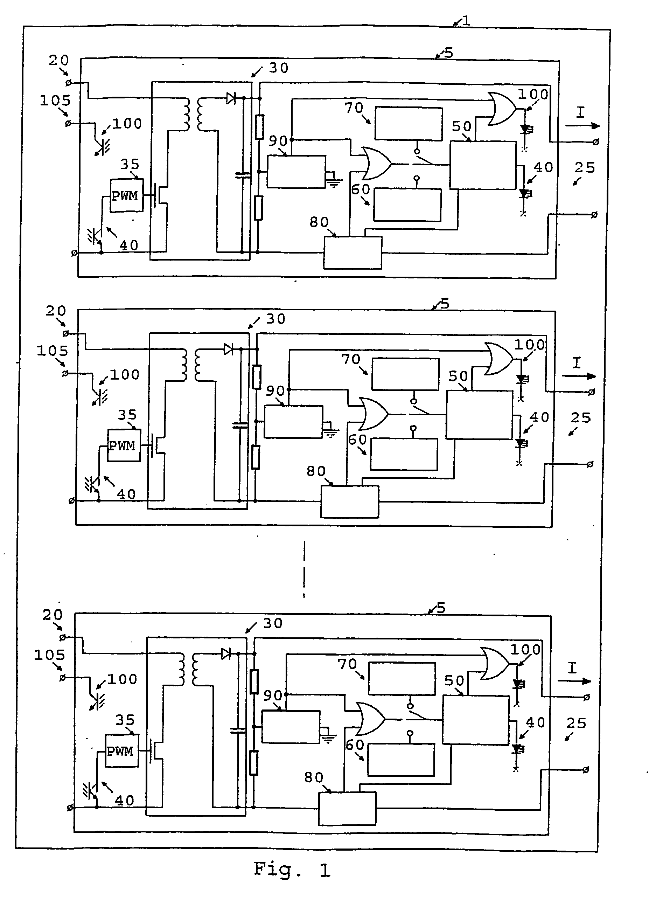

Reference is now made to Fig.1, which is a simplified block diagram illustration of a preferred implementation for remote line powering apparatus injecting power into the copper pairs. The apparatus comprises circuits arranged for detecting whether the electric power on each copper pair exceeds a predetermined threshold. The circuits shown in Fig.1 are used in the method for remote line powering in a telecom system, as disclosed in present invention.

The apparatus 1 is preferably located at the central office (CO) (not shown). Utility AC power and/or backed up DC power are usually readily available at the CO and can be used to supply the apparatus 1.

The method for remote line powering comprises the steps of
- feeding along each line pair in a plurality of line pairs that are adapted for use in the telecom network a direct current I at an input voltage having a value within the range from V_{A} to V_{B}, thereby supplying electric power via said plurality of line pairs,
- aggregating at the remote side the electric power supplied via the plurality of line pairs to provide a supply voltage Vₒᵤₜ₁ suitable for powering an appliance.
As opposed to prior art solutions the next steps in the method are :
- detecting at the line pairs side, where power is injected, whether said electric power exceeds a predetermined threshold, and
- if required, limiting said electric power supplied via each line pair of said plurality of line pairs.

Figure 1 represents a circuit arranged for performing the latter steps of the method for remote line powering. The apparatus 1 is preferably made of a plurality of identical units 5, all units being preferably, but not necessarily, connected to the same power source (not shown) on one side, and each unit being preferably connected to one line pair 25 on the other side.

Each unit 5 is preferably made of a power stage converter 30, a controller (modulator) 35, a symmetrical current detector 80, an asymmetrical current detector 90, two voltage references 60 and 70, and a voltage regulator 50. The voltage/current regulator 50 monitors the output voltage that is applied to the line pair 25 and compares it to reference voltage 60 or 70. The result of the comparison is an error signal that feeds opto-coupler 40, which reacts on modulator 35.

In normal conditions, i.e. when none of the current detectors 80 or 90 reacts, reference voltage 60 is used and this maintains the output voltage applied to the line pair 25 to a value comprised between V_{A} and V_{B}.

When the current through line pair 25 increases above a given level Iₘₐₓ (for example, but not necessarily 60 mA), the symmetrical current detector 80 may react on the voltage/current regulator 50 and lowers the output voltage applied to line pair 25 in order to maintain the current below or at Iₘₐₓ.

When the current through line pair 25 decreases below a given level Iₒₚₑₙ, the symmetrical current detector 80 may switch from a first reference voltage 60 to a second reference voltage 70, which lowers the output voltage applied to the line pair 25 preferably, but not necessarily, below 60 V_{DC} and may generate an alarm signal 105 through opto-coupler 100 and activate a LED alarm indicator (not shown).

When the voltage applied to line pair 25 decreases below a given level, for example, but not necessarily, V_{B}, the voltage/current regulator 50 may generate an alarm signal 105 through opto-coupler 100 and may activate a LED alarm indicator (not shown).

When the leakage current between line pair 25 and ground increases above another level Iₗₑₐₖ, the asymmetrical current detector 90 may switch from a first reference voltage 60 to a second voltage reference 70, which lowers the output voltage applied to the line pair 25 preferably, but not necessarily, below 60 V_{DC}, and may generate an alarm signal 105 through opto-coupler 100 and activate a LED alarm indicator (not shown).

The asymmetrical current detector 90 may also temporarily lower the output voltage applied to line pair 25 in order to check if the line pair 25 is generating the leakage to earth, and only then permanently lower the output voltage applied to line pair 25.
The method for remote line powering of the invention therefore provides the following advantages:
(1) Limitation of the current into a line pair to a value compliant with the safety requirements and standards.
(2) Detection of the abnormal condition of a line pair overload generated for instance, but not necessarily, by a short-circuited line pair, and generation of an alarm identifying this condition.
(3) Detection of the abnormal condition of an abnormally low current through a line pair generated for instance, but not necessarily, by a disconnection of a line pair, and generation of an alarm identifying this condition.
(4) Reduction of the voltage applied to a disconnected line pair, which reduces the risk of electric shock for personnel accidentally touching a disconnected line pair.
(5) Detection of the abnormal condition of a leakage from a line pair to ground, generated for instance, but not necessarily, by a person touching one wire of the line pair, and generation of an alarm identifying this condition.
(6) Reduction of the voltage applied to a line pair presenting an abnormally high leakage current to earth, thereby reducing the risk of electric shock for personnel accidentally touching a wire of a line pair.

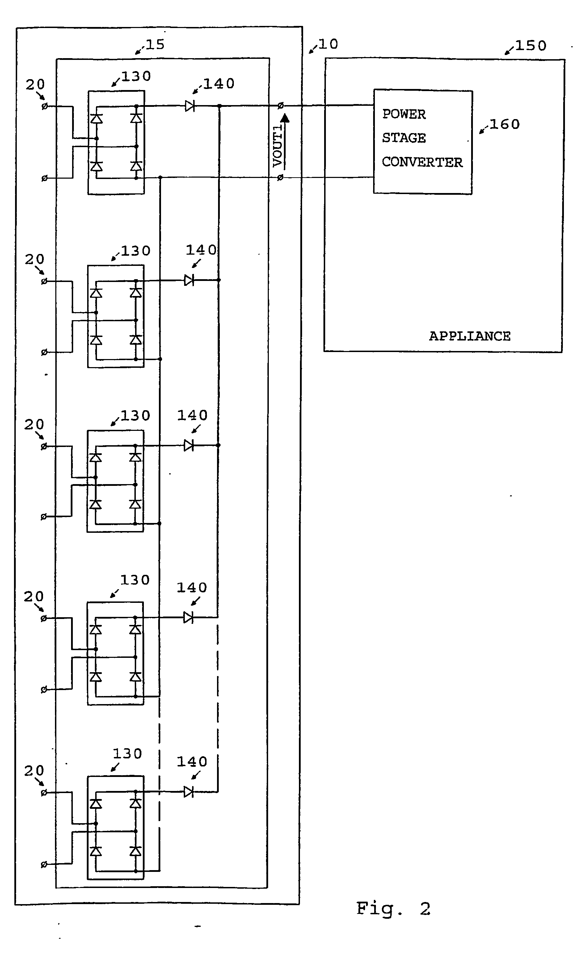

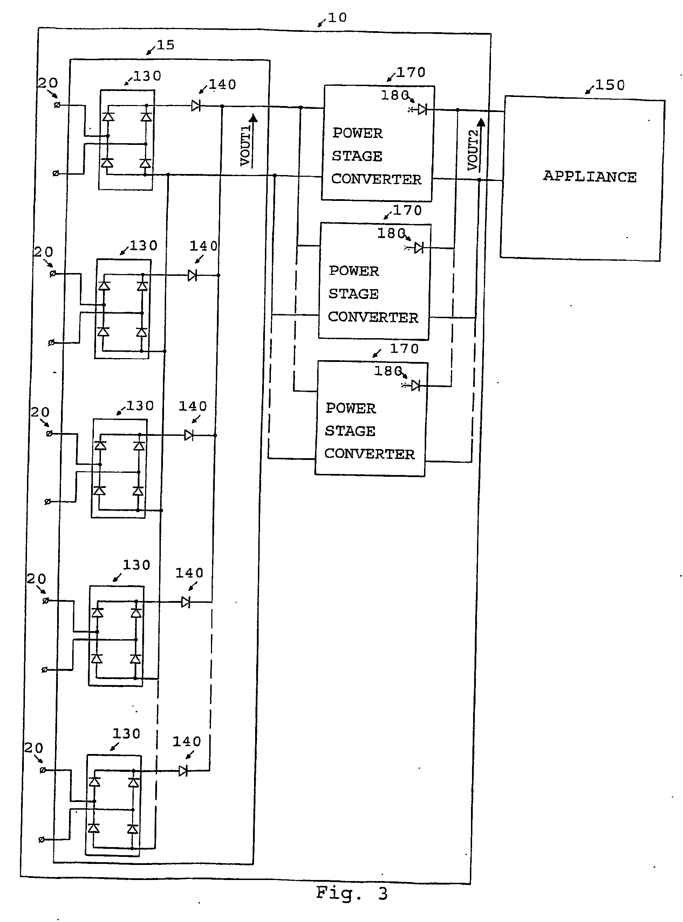

In Fig.2 and Fig.3 a remote line powering apparatus 10 is represented that is preferably located near subscriber premises (not shown) or in locations near the subscriber premises such as at a street cabinet (not shown) or underground cabinet (not shown).

Referring, for example and without limiting the generality of the foregoing, to the apparatus 10 as located at a street cabinet or at any subscriber associated unit that aggregates and distributes line pairs, the apparatus 10 may preferably be connected to a plurality of line pairs (not shown). The plurality of line pairs may preferably be used to convey electric power for powering appliances as described herein after. The electric power conveyed over the plurality of line pairs may be supplied by a corresponding plurality of power sources that may be located, for example, at the CO. Preferably, the plurality of line pairs are conventional line pairs that are suitable for use in a telecommunication network, like e.g. telephone line twisted pairs.

Typically, the plurality of line pairs are used in the telecommunication system to convey data, voice, signalling, electric power for powering the appliances or any combination thereof. The use of the plurality of line pairs for powering only is typically feasible because the street cabinet or the subscriber associated unit is typically connected to the CO via a bundle of line pairs that include spare line pairs that are not used for communication of data, voice and signalling. Those spare line pairs are typically the plurality of line pairs mentioned above.

In one embodiment of the invention more line pairs than strictly necessary to provide the power needed by the appliance are used, so that a number of pairs may suffer failures without affecting the operation of the appliance.

Reference is now made to Fig.2. Preferably, the apparatus 10 includes a plurality of line pair terminations 20 terminating the plurality of line pairs and an electric power aggregator 15, respectively. The electric power aggregator 15 is preferably operative to aggregate the electric power supplied via the plurality of line pairs to provide a supply voltage Vₒᵤₜ₁ suitable for powering an appliance (150). The electric power supplied via each line pair of the plurality of line pairs thereby meets the requirements of e.g. the international standard IEC60950-21. The appliance may preferably, but not necessarily, include a communications appliance that may include a communications interface.

The electric power aggregator 15 preferably includes a plurality of rectifying devices 130 arranged in a bridge configuration, and an additional series rectifying device 140. Each of the plurality of separate bridges of rectifying devices and each of the additional series rectifying devices is preferably associated with a corresponding line pair termination 20 terminating a single line pair. Typically there can be 16 or more rectifying devices 130 in one electronic power aggregator. The outputs of all series rectifying devices are preferably connected in parallel and generate aggregated voltage Vₒᵤₜ₁.

In one preferred embodiment of the invention, the aggregated voltage Vₒᵤₜ₁ is directly fed to an appliance (150) that is itself equipped with a power stage converter (160) designed to operate in the range V_{A} to V_{B}, and is possibly, but not necessarily, primarily designed to operate also with a utility AC line voltage.

Reference is now made to Fig.3 that is a simplified block diagram illustration of another preferred implementation of apparatus 10. Preferably, the apparatus 10 includes a plurality of line pair terminations 20 respectively terminating the plurality of line pairs and an electric power aggregator 15. The electric power aggregator 15 is preferably operative to aggregate the electric power supplied via the plurality of line pairs to provide a supply voltage Vₒᵤₜ₁ suitable for powering an appliance 150. The electric power supplied via each line pair of the plurality of line pairs does not exceed a predefined threshold, such as the threshold defined in international standard IEC60950-21. The appliance may preferably, but not necessarily, include a communications appliance that may include a communications interface.

Exactly as in Fig.2, the electric power aggregator 15 preferably includes a plurality of rectifying devices 130 arranged in a bridge configuration, and may include an additional rectifying device 140 in series. Each of the plurality of separate bridge of rectifying devices and each of the additional series rectifying devices is preferably associated with a corresponding line pair termination 20 terminating a single line pair. The outputs of all series rectifying devices are preferably connected in parallel and generate aggregated voltage Vₒᵤₜ₁.

In another preferred embodiment of the invention, the aggregated voltage Vₒᵤₜ₁ is fed to one or a plurality of power stage converters 170, the outputs of which may be connected in parallel in order to provide a common output voltage Vₒᵤₜ₂, preferably in the range from 40 V_{DC} to 72 V_{DC}. They may but do not necessarily include redundancy diodes 180 in series with one or both of their two output connections. The output voltage Vₒᵤₜ₂ may be compliant with telecommunication standards requirements like ETS 300 132-2 and feed directly appliances accepting supply voltage complying with such standards.

In alternative embodiment of the invention, more power stage converters 170 than strictly necessary to provide the power needed by the appliance are used, so that a number of power stage converters may suffer failures without affecting the operation of the appliance.

The apparatus 10 therefore provides the following advantages:
(1) Functional isolation of the line pairs from each other, which make it compliant with the safety regulations and standards, in particular with the requirement that the current through each line pair should be limited below a given value, e. g. 60 mA.
(2) Resilience to one or more line pair failures like short circuit, unwanted disconnection or failure of the power stage converter feeding one or more lines, i.e. the appliance may remain functional in such a case.
(3) Resilience to a component failure inside one of the rectifying bridges configurations, thanks to the additional rectifying device 140 in series.
(4) Resilience to one or more power stage converter 170 failures, i.e. the appliance may remain functional in such a case.
(5) Overall simplicity, cost effectiveness and reliability as compared to solutions using one power stage converter per line pair.
(6) Capability to use appliances requiring telecom standards compliant supply voltages.
(7) Capability to use appliances equipped with their own power stage converters and that may be primarily designed to operate from utility power.

## Claims

1. A method for remote line powering in a telecommunication network comprising the steps of
- feeding along each line pair in a plurality of line pairs that are adapted for use in said telecommunication network direct current I at an input voltage having a value within the range from V_{A} to V_{B}, thereby supplying electric power via said plurality of line pairs,
- aggregating the electric power supplied via said plurality of line pairs to provide a supply voltage Vₒᵤₜ₁ arranged for powering an appliance,
**characterised in that** before the step of feeding it comprises the steps of
- detecting at the line pairs side, where power is injected, whether said electric power exceeds a predetermined threshold, and
- if required, limiting said electric power supplied via each line pair of said plurality of line pairs.

2. The method according to claim 1, **characterised in that** said electric power is limited by independently limiting the voltage applied to each line pair.

3. The method according to claim 1, **characterised in that** said electric power is limited by independently limiting the current injected into each line pair.

4. The method according to claim 1, **characterised in that** said electric power is limited by independently limiting both the voltage applied to each line pair and the current injected into each line pair.

5. The method according to any of claims 1 to 4, **characterised in that** it comprises the further steps of detecting on a line pair a leakage current to earth and subsequently permanently reducing the voltage of said line pair.

6. The method according to any of claims 1 to 4, **characterised in that** it further comprises the step of temporarily reducing the voltage of said plurality of line pairs when a leakage current is detected, in order to identify the line pair on which said leakage current is flowing.

7. The method according to any of claims 1 to 4, **characterised in that**, when a leakage current in said plurality of line pairs is detected, the line pair on which said leakage current is flowing is identified by reducing temporarily the voltage of each line pair in turn.

8. The method according to any of the previous claims, wherein V_{A} ≥ 100V_{DC}, V_{B} ≤ 400V_{DC}, and I ≤ 60 mA DC.

9. The method according to claim 1, wherein the step of aggregating the electric power supplied via said plurality of line pairs to provide said supply voltage Vₒᵤₜ₁ is performed with a plurality of diode bridges (130).

10. The method according to claim 9 , wherein a plurality of additional diodes (140) is used in series with said plurality of diode bridges (130).

11. The method according to any of claims 1 to 10, wherein said supply voltage Vₒᵤₜ₁ is within a range from about 100V_{DC} to about 400V_{DC}.

12. The method according to claim 9 or 10, wherein said supply voltage Vₒᵤₜ₁ is further converted into a supply voltage Vₒᵤₜ₂ through the use of one DC/DC converter (170).

13. The method according to claim 9 or 10, wherein said supply voltage Vₒᵤₜ₁ is further converted into a supply voltage Vₒᵤₜ₂ through the use of a plurality of DC/DC converters (170).

14. The method according to claim 9 or 10, wherein said supply voltage Vₒᵤₜ₂ is within a range from about 40V_{DC} to about 72V_{DC}.

15. An apparatus (10) for remote line powering in a telecommunication network comprising
- a plurality of line pair terminations (20) terminating a corresponding plurality of line pairs that are adapted for use in said telecom network, the line pairs being operative to convey electric power supplied by a corresponding plurality of power sources, and
- an electric power aggregator (15) comprising a plurality of diode bridges (130) operative to aggregate the electric power supplied via said plurality of line pairs to provide a supply voltage Vₒᵤₜ₁ suitable for powering an appliance (150).

16. An apparatus (10) as in claim 15, further comprising one DC/DC converter (170).

17. An apparatus as in claim 15, further comprising a plurality of DC/DC converters (170).

18. An apparatus as in claims 16 or 17, wherein said DC/DC converter comprises a redundancy diode 180.

19. An apparatus as in claims 15 to 18, **characterised in that** said electric power aggregator further comprises a plurality of additional diodes (140) in series with said plurality of diode bridges.

20. An apparatus as in any of claims 15 to 19, further comprising an alarm and logic unit.

21. A communication system comprising an apparatus as in any of claims 15 to 20.

## Patentansprüche

1. Verfahren zum dezentralen Leitungsversorgen in einem Telekommunikationsnetz, die folgenden Schritte umfassend:
- Speisen entlang jedes Leitungspaars in einer Vielzahl von Leitungspaaren, die für den Gebrauch in dem Telekommunikationsnetz geeignet sind, von Gleichstrom I mit einer Eingangspannung, die einen Wert innerhalb des Bereichs von V_{A} bis V_{B} hat, um Elektroenergie über die Vielzahl von Leitungspaaren zu liefern,
- Kumulieren der Elektroenergie, die über die mehreren Leitungspaare geliefert wird, um eine Versorgungsspannung Vₒᵤₜ₁ zum Versorgen eines Geräts zu liefern,
**dadurch gekennzeichnet, dass** das Verfahren vor dem Schritt des Speisens die folgenden Schritte aufweist:
- Erfassen auf der Leitungspaarseite, an der die Elektroenergie injiziert wird, ob die Elektroenergie einen vorbestimmten Schwellenwert überschreitet, und
- bei Bedarf, Beschränken der Elektroenergie, die über jedes Leitungspaar der mehreren Leitungspaare geliefert wird.

2. Verfahren nach Anspruch 1, **dadurch gekennzeichnet, dass** die Elektroenergie durch unabhängiges Beschränken der Spannung, die an jedes Leitungspaar angelegt wird, beschränkt wird.

3. Verfahren nach Anspruch 1, **dadurch gekennzeichnet, dass** die Elektroenergie durch unabhängiges Beschränken des Stroms, der in jedes Leitungspaar injiziert wird, beschränkt wird.

4. Verfahren nach Anspruch 1, **dadurch gekennzeichnet, dass** die Elektroenergie durch unabhängiges Beschränken sowohl der Spannung, die an jedes Leitungspaar angelegt wird, als auch des Stroms, der in jedes Leitungspaar injiziert wird, beschränkt wird.

5. Verfahren nach einem der Ansprüche 1 bis 4, **dadurch gekennzeichnet, dass** es ferner die Schritte des Erfassens eines Leckstroms zur Erde auf einem Leitungspaar und daraufhin das permanente Verringern der Spannung des Leitungspaars aufweist.

6. Verfahren nach einem der Ansprüche 1 bis 4, **dadurch gekennzeichnet, dass** es ferner den Schritt des vorübergehenden Verringerns der Spannung der mehreren Leitungspaare aufweist, wenn ein Leckstrom erfasst wird, um das Leitungspaar zu identifizieren, auf dem der Leckstrom fließt.

7. Verfahren nach einem der Ansprüche 1 bis 4, **dadurch gekennzeichnet, dass**, wenn ein Leckstrom in den mehreren Leitungspaaren erfasst wird, das Leitungspaar, auf dem der Leckstrom fließt, durch vorübergehendes Verringern der Spannung auf jedem Leitungspaar abwechselnd identifiziert wird.

8. Verfahren nach einem der vorhergehenden Ansprüche, wobei V_{A} ≥ 100 V_{DC}, V_{B} ≤ 400 V_{DC}, und I ≤ 60 mA DC.

9. Verfahren nach Anspruch 1, wobei der Schritt des Kumulierens der Elektroenergie, die über die mehreren Leitungspaare geliefert wird, um die Speisungsspannung Vₒᵤₜ₁ zu liefern, mit mehreren Diodenbrücken (130) ausgeführt wird.

10. Verfahren nach Anspruch 9, wobei eine Vielzahl zusätzlicher Dioden (140) in Serie geschaltet mit den mehreren Diodenbrücken (130) verwendet wird.

11. Verfahren nach einem der Ansprüche 1 bis 10, wobei die Versorgungsspannung Vₒᵤₜ₁ innerhalb eines Bereichs von etwa 100 V_{DC} bis etwa 400 V_{DC} liegt.

12. Verfahren nach Anspruch 9 oder 10, wobei die Versorgungsspannung Vₒᵤₜ₁ ferner durch den Gebrauch eines DC/DC-Wandlers (170) in eine Versorgungsspannung Vₒᵤₜ₂ umgewandelt wird.

13. Verfahren nach Anspruch 9 oder 10, wobei die Versorgungsspannung Vₒᵤₜ₁ ferner über den Gebrauch mehrerer DC/DC-Wandler (170) in eine Versorgungsspannung Vₒᵤₜ₂ umgewandelt wird.

14. Verfahren nach Anspruch 9 oder 10, wobei die Versorgungsspannung Vₒᵤₜ₂ innerhalb eines Bereichs von etwa 40 V_{DC} bis etwa 72 V_{DC} liegt.

15. Gerät (10) zum dezentralen Leitungsversorgen in einem Telekommunikationsnetzwerk, umfassend:
- mehrere Leitungspaarabschlüsse (20), die mehrere entsprechende Leitungspaare abschließen, die für den Gebrauch in dem Telekommunikationsnetz geeignet sind, wobei die Leitungspaare betrieben werden können, um Elektroenergie zu befördern, die von mehreren entsprechenden Leistungsquellen geliefert werden, und
- Kumulierer (15) für Elektroenergie, der mehrere Diodenbrücken (130) aufweist, die betrieben werden können, um die Elektroenergie zu kumulieren, die über die mehreren Leitungspaare geliefert wird, um eine Versorgungsspannung Vₒᵤₜ₁ bereitzustellen, die für das Versorgen eines Geräts (150) geeignet ist.

16. Gerät (10) nach Anspruch 15, das ferner einen DC/DC-Wandler (170) aufweist.

17. Gerät nach Anspruch 15, das mehrere DC/DC-Wandler (170) aufweist.

18. Gerät nach Anspruch 16 oder 17, wobei der DC/DC-Wandler eine Redundanzdiode (180) aufweist.

19. Gerät nach den Ansprüchen 15 bis 18, **dadurch gekennzeichnet, dass** der Elektroenergiekumulierer ferner mehrere zusätzliche Dioden (140) in Serie geschaltet mit den mehreren Diodenbrücken aufweist.

20. Gerät nach einem der Ansprüche 15 bis 19, das ferner einen Alarm und eine Logikeinheit aufweist.

21. Kommunikationssystem, das ein Gerät nach einem der Ansprüche 15 bis 20 aufweist.

## Revendications

1. Procédé d'alimentation à distance par lignes dans un réseau de télécommunication comprenant les étapes suivantes :
- alimentation le long de chaque paire de lignes dans une pluralité de paires de lignes adaptées à l'utilisation dans ledit réseau de télécommunication, d'un courant continu I à une tension d'entrée dont la valeur est comprise dans la gamme allant de V_{A} à V_{B}, fournissant de cette manière de l'énergie électrique via ladite pluralité de paires de lignes,
- regroupement de l'énergie électrique fournie via ladite pluralité de paires de lignes pour fournir une tension d'alimentation V_{SORTIE1} prévue pour alimenter un appareil,
**caractérisé en ce qu'**avant l'étape d'alimentation il comprend les étapes de:
- détection du côté des paires de lignes, à l'endroit où l'énergie est injectée, si ladite énergie électrique dépasse un seuil prédéterminé, et
- si nécessaire, limitation de ladite énergie électrique fournie via chaque paire de lignes de ladite pluralité de paires de lignes.

2. Procédé selon la revendication 1, **caractérisé en ce que** ladite énergie électrique est limitée en limitant indépendamment la tension appliquée sur chaque paire de lignes.

3. Procédé selon la revendication 1, **caractérisé en ce que** ladite énergie électrique est limitée en limitant indépendamment le courant injecté dans chaque paire de lignes.

4. Procédé selon la revendication 1, **caractérisé en ce que** ladite énergie électrique est limitée en limitant indépendamment à la fois la tension appliquée sur chaque paire de lignes et le courant injecté dans chaque paire de lignes.

5. Procédé selon l'une quelconque des revendications 1 à 4, **caractérisé en ce qu'**il comprend les étapes supplémentaires de détection sur une paire de lignes d'un courant de fuite vers la terre et par la suite de réduction permanente de la tension de ladite paire de lignes.

6. Procédé selon l'une quelconque des revendications 1 à 4, **caractérisé en ce qu'**il comprend en outre l'étape de réduction temporaire de la tension de ladite pluralité de paires de lignes quand un courant de fuite est détecté, de manière à identifier la paire de lignes par laquelle le courant de fuite transite.

7. Procédé selon l'une quelconque des revendications 1 à 4, **caractérisé en ce**, quand un courant de fuite est détecté dans ladite pluralité de paires de lignes, la paire de lignes par laquelle le courant de fuite transite est identifiée en réduisant temporairement la tension sur chaque paire de lignes chacune à leur tour.

8. Procédé selon l'une quelconque des revendications précédentes, dans lequel V_{A} ≥ 100V_{CONTINU}, V_{B} ≤ 400V_{CONTINU}, et I ≤ 60 mA_{CONTINU}.

9. Procédé selon la revendication 1, dans lequel l'étape de regroupement de l'énergie électrique fournie via ladite pluralité de paires de lignes afin de fournir ladite tension d'alimentation V_{SORTIE1} est réalisée par une pluralité de ponts de diodes (130).

10. Procédé selon la revendication 9, dans lequel une pluralité de diodes additionnelles (140) est utilisée en série avec ladite pluralité de ponts de diodes (130).

11. Procédé selon l'une quelconque des revendications 1 à 10, dans lequel ladite tension d'alimentation V_{SORTIE1} est comprise dans une gamme allant d'environ 100 V_{CONTINU} à environ 400 V_{CONTINU}.

12. Procédé selon la revendication 9 ou 10, dans lequel ladite tension d'alimentation V_{SORTIE1} est en outre convertie en une tension d'alimentation V_{SORTIE2} par l'utilisation d'un convertisseur continu/continu (170).

13. Procédé selon la revendication 9 ou 10, dans lequel ladite tension d'alimentation V_{SORTIE1} est en outre convertie en une tension d'alimentation V_{SORTIE2} par l'utilisation d'une pluralité de convertisseurs continu/continu (170).

14. Procédé selon la revendication 9 ou 10, dans lequel ladite tension d'alimentation V_{SORTIE2} est comprise dans une gamme allant d'environ 40V_{CONTINU} à environ 72V_{CONTINU}.

15. Dispositif (10) d'alimentation à distance par lignes dans un réseau de télécommunication comprenant
- une pluralité d'extrémités de paires de lignes (20) terminant une pluralité correspondante de paires de lignes adaptées à l'utilisation dans ledit réseau de télécommunication, les paires de lignes étant opérationnelles pour véhiculer de l'énergie électrique fournie par une pluralité correspondante de sources d'énergie, et
- un dispositif de regroupement de l'énergie électrique (15) comprenant une pluralité de ponts de diodes (130) opérationnel pour regrouper l'énergie électrique fournie via ladite pluralité de paires de lignes pour fournir une tension d'alimentation V_{SORTIE1} convenant à l'alimentation d'un appareil (150).

16. Dispositif (10) selon la revendication 15, comprenant en outre un convertisseur continu/continu (170).

17. Dispositif selon la revendication 15, comprenant en outre une pluralité de convertisseurs continu/continu (170).

18. Dispositif selon la revendication 16 ou 17, dans lequel ledit convertisseur continu/continu comprend une diode de redondance (180).

19. Dispositif selon les revendications 15 à 18, **caractérisé en ce que** ledit dispositif de regroupement d'énergie électrique comprend en outre une pluralité de diodes supplémentaires (140) en série avec ladite pluralité de ponts de diodes.

20. Dispositif selon l'une quelconque des revendications 15 à 19, comprenant en outre une unité d'alarme et logique.

21. Système de communication comprenant un dispositif selon l'une quelconque des revendications 15 à 20.
